Europäisches Patentamt

European Patent Office

Office européen des brevets

(19)

(11) Veröffentlichungsnummer : **0 132 636**
**B1**

(12)  # EUROPÄISCHE PATENTSCHRIFT

(45) Veröffentlichungstag der Patentschrift :
04.05.88

(51) Int. Cl.⁴ : **C 08 F210/18, C 08 F 4/02**

(21) Anmeldenummer : **84107727.4**

(22) Anmeldetag : **04.07.84**

(54) Katalysatorsystem und seine Verwendung zur Herstellung von EPDM-Kautschuk.

(30) Priorität : **26.07.83 DE 3326839**

(43) Veröffentlichungstag der Anmeldung :
**13.02.85 Patentblatt 85/07**

(45) Bekanntmachung des Hinweises auf die Patenterteilung : **04.05.88 Patentblatt 88/18**

(84) Benannte Vertragsstaaten :
**DE FR GB IT NL**

(56) Entgegenhaltungen :
**BE-A-  836 740**
**Die Akte enthält technische Angaben, die nach dem Eingang der Anmeldung eingereicht wurden und die nicht in dieser Patentschrift enthalten sind.**

(73) Patentinhaber : **BUNAWERKE HÜLS GMBH**
**Postfach 1320**
**D-4370 Marl 1 (DE)**

(72) Erfinder : **Beck, Manfred, Dr.**
**Hahnenweg 3**
**D-5000 Koeln 80 (DE)**

EP 0 132 636 B1

## Beschreibung

Die Erfindung betrifft ein Katalysatorsystem und dessen Verwendung zur Herstellung von Copolymeren aus $C_2$-$C_6$-Olefingemischen, beispielsweise Ethylen und Propylen, und einem nicht-konjugierten Polyen (EPDM-Kautschuke).

Die Herstellung von EPDM-Kautschuken ist bekannt. Sie werden aus den genannten Monomeren unter Verwendung von Katalysatoren auf Basis von in Hexan löslichen Vanadium-verbindungen und aluminiumorganischen Verbindungen hergestellt. Der Einbau des Diens ist vom Katalysatortyp abhängig, wobei die Verteilung des Diens entlang der Polymerkette die Vernetzungseigenschaften beeinflußt. Je gleichmäßiger die Verteilung ist, umso günstiger ist das Vernetzungsverhalten des Kautschuks. Es besteht Bedarf an in dieser Hinsicht verbesserten EPDM-Kautschuken. Ein weiteres Problem bei der Herstellung von Ethylen/Propylen/Dien-Polymeren ist insbesondere bei Dicyclopentadien als Dien und Ethylaluminiumsesquichlorid als Katalysatorkomponente die Bildung von langkettenverzweigten Polymeren, im Extremfall das Entstehen von im verwendeten Lösungsmittel unlöslichem Polymer (Gel). Es besteht auch hier, abgesehen von der Vermeidung der Gelbildung, bei der Herstellung der Bedarf an geringer verzweigten Polymeren, da deren rheologisches Verhalten zu einer verbesserten Verarbeitbarkeit führt.

In der DE-A-24 17 937 wird beschrieben, daß die Verarbeitbarkeit von EPDM verbessert werden kann, wenn man ein Katalysatorsystem aus

(1) einem Alkylaluminiumhalogenid,
(2) mindestens einer Übergangsmetallverbindung, beispielsweise einer Vanadinverbindung und
(3) einem niedermolekularen Ether oder Ester mit einem aromatischen und/oder $\alpha$-olefinischen Rest
verwendet.

Der Einsatz gesättigter Carbonsäureester zeigt keinen Effekt. Die verwendeten ungesättigten Ester und Ether haben den Nachteil hoher Flüchtigkeit, was in technischen Großanlagen Rückführungsprobleme mit sich bringt. Ferner besitzen diese Verbindungen meist einen intensiven Geruch, der sich dem Kautschuk überträgt.

In der BE-A-836 740 werden Katalysatoren beschrieben, die sich u.a. für die Polymerisation von EPDM eignen und die neben einem Alkylaluminiumhalogenid und einer Vanadiumverbindung ein Polymer enthalten, das durch Pfropfung von Monomeren, die auch Estergruppen enthalten können, auf ein Trägerpolymer erhalten werden. Die Polymeren sind im Reaktionsmedium unlöslich und verbleiben in großer Menge im EPDM, was nachteilig für dessen Eigenschaften ist.

Es wurde nun gefunden, daß man verbesserte EPDM-Kautschuke ohne diese Nachteile erhält, wenn man ein Katalysatorsystem verwendet, welches ein im Reaktions-medium lösliches estergruppenhaltiges Polymeres enthält. Bei der Verwendung der erfindungsgemäßen Katalysatorsysteme polymerisiert man Ethylen, Propylen oder andere $C_2$-$C_6$-Olefingemische und ein Polyen in einem Kohlenwasserstofflösungsmittel mit Hilfe eines Katalysatorsystems aus

1) einer Vanadiumverbindung,
2) einem Aluminiumhalogenid der Formel $AlR_{3-n}X_n$,
worin R $C_1$-$C_8$-Alkyl,
X Halogen und
n 1 bis 2 bedeuten, und
3) einem im Reaktionsmedium löslichen estergruppenhaltigen Polymeren.

Gegenstand der Erfindung ist daher ein Katalysatorsystem aus

1) einer Vanadiumverbindung,
2) einem Aluminiumhalogenid der Formel $AlR_{3-n}X_n$,
worin R $C_1$-$C_8$-Alkyl,
X Halogen und
n 1 bis 2 bedeuten, und
3) einem in Propen, Butenen, Pentan, Hexan, Cychohexan, Benzol oder Toluol oder Mischungen dieser Kohlenwasserstoffe löslichen estergruppenhaltigen Polymer.

Ein weiterer Gegenstand der Erfindung ist ein Verfahren zur Polymerisation von Gemischen aus wenigstens zwei $C_2$-$C_6$-Olefinen und einem Polyen in einem Kohlenwasserstoff mit Hilfe des vorstehend genannten Katalysatorsystems.

Derartige Katalysatoren liefern EPDM-Kautschuke auf Basis Ethylidennorbornen, deren Schwefelvulkanisate im Vergleich zu den ohne estergruppenhaltige Polymere hergestellten verbesserte Eigenschaften besitzen. Je nach Typ des estergruppenhaltigen Polymeren lassen sich verschiedene Vulkanisateigenschaften wie Reißfestigkeit, Modul oder die Shore-Härte verbessern. Im Fall der Copolymerisation von Dicyclopentadien wird die üblicherweise eintretende Gelbildung fast vollständig zurückgedrängt. Dies hat große Vorteile bei Ausführung des technischen Verfahrens, da die Anlagen nur selten zum Zwecke der Reinigung abgestellt werden müssen. Weiterhin werden wesentlich geringer verzweigte Polymere erhalten, deren Verarbeitbarkeit verbessert ist.

Das Verfahren hat außerdem den Vorzug, daß der Zusatz von estergruppenhaltigen Polymeren in technischen Anlagen keine Rückführungsprobleme bietet, da die estergruppenhaltigen Polymeren im allgemeinen unter den Aufarbeitungsbedingungen im Kautschuk verbleiben, und daß auch keine Geruchsprobleme auftreten, da Polyester im Gegensatz zu niedermolekularen Estern geruchlos sind.

Die estergruppenhaltigen Polymeren haben einen Polymerisationsgrad von 3 bis 5000, vorzugsweise von 5 bis 1000, und können folgenden Substanzklassen angehören :

1. Typ Acrylatpolymere : (Co-)Polymere bzw. Oligomere aus $\alpha$, $\beta$-ungesättigten Mono- und Polycarbonsäureestern, z. B. Polybutylacrylat oder dessen Copolymere mit Vinyl-, Allyl- oder Dienverbindungen einzeln oder in Kombination, Copolymere mit Itaconsäureoder Citraconsäureestern. Die OH-Komponente des Esters kann gegebenenfalls substituiertes $C_1$-$C_{20}$-Alkyl oder substituiertes Phenyl sein.

2. Typ Vinylesterpolymer : Polyvinylacetat und dessen Copolymere, z. B. Ethylen/Vinylacetat-Copolymer.

3. Typ Polyester aus Dicarbonsäuren und Dialkoholen mit verzweigten oder geradkettigen $C_2$-$C_{36}$-Dicarbonsäuren, $C_4$-$C_{40}$-ungesättigten Dicarbonsäuren, $C_2$-$C_{36}$-Dialkoholen, $C_4$-$C_{40}$-ungesättigten Diolen.

4. Typ Polyester aus Hydroxycarbonsäuren, z. B. $\gamma$-Hydroxybuttersäure, $\epsilon$-Hydroxycapronsäure, p-Hydroxybenzoesäure, Hydroxymethylbenzoesäure, Rizinolsäure und hydrierte Rizinolsäure.

Die obere Grenze des Polymerisationsgrades der estergruppenhaltigen Polymeren wird durch die Löslichkeit dieser Verbindungen im Reaktionsmedium bestimmt. Als Vanadiumverbindungen können beispielsweise Vanadinoxychlorid; Vanadiumtetrachlorid, Vanadinsäureester, Chlorovanadinsäureester und Vanadiumtrisacetylacetonat verwendet werden, wobei die Ester von gegebenenfalls halogensubstituierten $C_1$-$C_{10}$-Alkanolen abgeleitet sind.

Beispiele für Aluminiumalkyle vom Typ $AlR_{3-n}X_n$ sind Diethylaluminiumchlorid, Ethylaluminiumsesquichlorid, Dibutylaluminiumchlorid und Ethylaluminiumsesquibromid. Vorzugsweise werden Ethylaluminiumsesquichlorid und Diethylaluminiumchlorid verwendet.

Als Polyene eignen sich insbesondere nicht-konjugierte Diene, Triene und Polyene, beispielsweise Vinylpolybutadien. Bevorzugt sind nicht-konjugierte Diene, insbesondere Ethylidennorbornen und Dicyclopentadien.

Bevorzugte estergruppenhaltige Polymere sind solche, die in Hexan löslich sind. Besonders bevorzugt sind Polyacrylate und Ester aus Dicarbonsäuren und Diolen, z. B. aus Hexandiol und dimerer Ölsäure.

Bevorzugte Vanadinverbindungen sind Vanadinoxychlorid und Chlorovanadinsäureester.

Die Wirksamkeit des Katalysators wird vom Verhältnis der Estergruppen je Mol Übergangsmetallverbindung beeinflußt. Je Mol Metallverbindung können 0.1-100 Mole Estergruppen, vorzugsweise 0.2-10 Mole eingesetzt werden. Das molare Verhältnis von Aluminiumverbindung zur Vanadiumverbindung beträgt 3 : 1 bis 100 : 1, insbesondere 5 : 1 bis 50 : 1, bevorzugt 10 : 1 bis 40 : 1.

Die Polymerisationstemperatur kann im Bereich von 10 bis 120 °C liegen. Bevorzugt sind Temperaturen von 30 bis 70 °C.

Das Verfahren wird in Kohlenwasserstoffen oder Mischungen von diesen durchgeführt. Beispiele hierfür sind Propen, Butene, Pentan, Hexan, Cyclohexan, Benzol, Toluol. Bevorzugt ist Hexan, worin die Reaktionsprodukte praktisch löslich sind.

Nach der Polymerisation stoppt man durch Zugabe von Wasser oder anderen geeigneten Substanzen ab und fügt Stabilisatoren, z. B. vom Phenoltyp zu.

Das EPDM wird durch Koagulation in heißem Wasser unter Abdampfen des Lösungsmittels, Filtration und Trocknung isoliert.

In den nachstehend beschriebenen Beispielen wird der Einfluß des Katalysatorsystems sowohl auf das rheologische Verhalten als auch auf die Vulkanisatwerte der EPDM-Kautschuke wiedergegeben. Man kann durch Anwendung des erfindungsgemäßen Katalysatorsystems Ethylidennorbornen-EPDM-Typen herstellen, die ein verbessertes Netzwerk im Vulkanisat aufweisen. Durch Anwendung des erfindungsgemäßen Katalysators bei der Herstellung von Dicyclopentadien-EPDM-Typen wird die Gelbildung fast vollständig vermieden. Die rheologischen Eigenschaften sind verbessert.

Der Einfluß des neuen Katalysatorsystems auf das viscoelastische Verhalten der Polymeren läßt sich leicht durch Anwendung des von R. Koopmann und H. Kramer veröffentlichten rheologischen Tests (ASTM-Symposium on processibility and rheology of rubber, 21. June 1982, Toronto, veröffentlicht in « Kautschuk, Gummi und Kunststoffe » 36 (1983), S. 108) aufzeigen. Es handelt sich um die Messung der Mooney-Relaxation MR sowie um einen erweiterten Defo-Test. Es wurde durch Anwendung dieses Tests festgestellt, daß erfindungsgemäß Polymere mit geringerer Verzweigung gebildet werden. Überraschen war, daß Substanzen, die eine Vielzahl von Estergruppen tragen, einen starken Einfluß auf das viscoelastische Verhalten der Polymeren ausüben.

Die Herstellung des Katalysators kann durch beliebiges Zusammengeben der Komponenten erfolgen. Eine Vereinfachung des Verfahrens besteht darin, die Vanadinverbindung und das estergruppenhaltige Polymer vorzumischen und dann in die Katalysatorherstellung einzudosieren.

Beispiele 1-4

In einen 2 l-Reaktor werden stündlich bei 50 °C folgende Mengen nachstehender Substanzen dosiert:

2,7 l n-Hexan,
100 g Ethylen,
370 g Propylen,
9 g Ethylidennorbornen (EN),
0,767 g Ethylaluminiumsesquichlorid (EASC),
0,03 g VOCl$_3$,
0,43 g Butylperchlorcrotonat (BPCC).

Dabei waren die Katalysatorkomponenten getrennt in einem Teil des Hexans gelöst, EN in der übrigen Menge des Hexans. Ferner wurden die in Tabelle 1 angegebenen Substanzen zugepumpt (g/h).

Die Reaktion wurde mit konstant gehaltenem Reaktorinhalt gefahren, d. h. es wurden stündlich die gleichen Volumina entnommen wie zugefügt.

Es wurden die in Tabelle 1 genannten Werte ermittelt.

(Siehe Tabelle 1 Seite 5 f.)

4

Tabelle 1

| Beispiel | Anilin | Ester | | ML-4' (100°C) | MR | $V_{10}$ | $-n_1$ | DE30 | DH30 | $\dfrac{ML}{DE30} \times 100$ |
|---|---|---|---|---|---|---|---|---|---|---|
| | | Menge | Typ | | | | | | | |
| 1 | 0.2 | 0.5 | A | 99.3 | 2.8 | 103.1 | 0.482 | 14.7 | 11.6 | 676 |
| 2 (Vergleich) | 0.15 | – | – | 101.3 | 5.4 | 146.0 | 0.591 | 24.1 | 15.1 | 420 |
| 3 | 0.15 | 0.164 | B | 106.1 | 3.8 | 105.2 | 0.472 | 14.1 | 11.8 | 752 |
| 4 | 0.14 | 0.825 | A | 71.8 | 1.4 | 49.0 | 0.372 | 9.5 | 5.6 | 755 |

A = Polyester aus Hexandiol-1.6 und dimerer Ölsäure mit MG 10.000 (dampfdruckosmometrisch)
B = Polybutylacrylat mit rel. Lösungsviskosität in Toluol (5 g/l) bei 25 °C von 44 cm³/g

0 132 636

Das dem Reaktor entnommene Gemisch wurde mit 100 ml/h Wasser abgestoppt, dann als Stabilisator 0,2 g/h 3-(4-Hydroxy-3,5-di-tert.-butylphenyl)-propionsäureoctadecylester zugefügt und das Polymer durch Fällen mit Ethanol isoliert. Nach dem Trocknen (14 Stunden, 70 °C) wurden die Proben nach der Defo- und Mooney-Relaxationsmethode (MR) von Koopmann und Kramer untersucht. Aus Tabelle 1 ist zu entnehmen, daß Versuchsprodukt 2 (ohne Esterzusatz) die höchste Mooney-Relaxation unter den aufgrund der nahe beieinander liegenden Mooney-Werte und daher vergleichbaren Produkten 1-3 besitzt. Deutlich erniedrigt sind die MR-Werte von Versuch 1 (Polyester A) und Versuch 3 (Polybutylacrylat).

Der Vergleich von Versuch 1 und 4 zeigt den Einfluß der Menge an Polyester A. Praktisch analoge Ergebnisse liefern die Defo-Messungen, als Kennzahl läßt sich das Verhältnis ML/DE 30 × 100 verwenden. Je höher diese Kennzahl, d. h., je niederiger die DE bei gegebenem ML-Wert ist, umso geringer verzweigt ist das Polymer.

## Beispiel 5-6

Analog der allgemeinen Verfahrensweise der Beispiele 1 bis 4 wurden zwei Polymere hergestellt, das eine war unter Verwendung eines Copolymeren aus Ethylen/Vinylacetat (VA-Gehalt 34 % ; Mn 3800 ; lu $\eta_{rel}$ 0,115) hergestellt worden (Tabelle 2). Abweichende Herstelldaten : 4 g/h EN, Temperatur 45 °C.

### Tabelle 2

| Beispiel | Ester | ML 4' (100°C) | MR | I.V. | $V_{10}$ | DE30 | $-n_1$ |
|---|---|---|---|---|---|---|---|
| 5 (Vergleich) | – | 65.0 | 5.1 | 206 | 91.1 | 24.4 | 0.593 |
| 6 | 0.3 | 62.8 | 3.1 | 206 | 75.7 | 20.9 | 0.534 |

Beispiel 6 zeigt gegen Vergleichsbeispiel 5 den Einfluß von Polyvinylacetatcopolymeren auf das viscoelastische Verhalten von EPDM.

## Beispiel 7-8

Analog der allgemeinen Verfahrensweise der Beispiele 1 bis 4 wurden EPDM-Polymere mit abweichenden Mengen EN hergestellt (Tabelle 3).

### Tabelle 3

| Beispiel | EN | Poly-butyl-acrylat | ML 4' (100°C) | DH | DE | Jod-zahl | MR | $\frac{ML}{DE}$ x 100 | Propylen (%) |
|---|---|---|---|---|---|---|---|---|---|
| 7 (Vergleich) | 12 | – | 79 | 10.5 | 26 | 19.1 | 6.3 | 304 | 51.3 |
| 8 | 12 | 0.14 | 89 | 10.5 | 17 | 18.9 | 4.5 | 524 | 46.0 |

Aus den Polymeren Beispiel 7 und 8 wurden nach folgender Rezeptur Mischungen hergestellt und bei 160 °C 45 Minuten vulkanisiert :

| | |
|---|---|
| Polymer | 100 Gew.-Tle. |
| Ruß Corax 3 | 50 Gew.-Tle. |
| paraffinisches Mineralöl | 10 Gew.-Tle. |
| Zinkoxid, aktiv | 2 Gew.-Tle. |
| Stearinsäure | 1 Gew.-Tl. |
| Schwefel | 1.2 Gew.-Tle. |
| Beschleuniger Mercaptobenzthiazol | 1.4 Gew.-Tle. |
| Tetramethylthiuramdisulfid | 0.2 Gew.-Tle. |
| Aminsalz der Diisobutyldithiophosphorsäure | 0,5 Gew.-Tle. |

In Tabelle 4 sind die Vulkanisateigenschaften zusammengestellt. Im Vergleich wurde ein handelsüblicher EPDM-Typ mit ML4' (100 °C) = 70, 54 % Ethylengehalt und 8 Doppelbindungen/1 000 C-Atome (Beispiel 9) unter gleichen Bedingungen vulkanisiert.

Tabelle 4

| Beispiel | F | D | M(100) | M(300) | H | E | C.S. |
|----------|------|-----|--------|--------|----|----|-----------|
| 7 | 15.0 | 400 | 2.9 | 11.6 | 70 | 52 | 13.1/46.4 |
| 8 | 15.7 | 355 | 3.5 | 14.2 | 72 | 56 | 11.3/48.8 |
| 9 (Vergleich) | 15.5 | 370 | 3.3 | 12.5 | 71 | 52 | 14.1/56.3 |

Dabei sind F die Reißfestigkeit, D die Reißdehnung, M(100) der Modul bei 100 % Dehnung, M(300) der Modul bei 300 % Dehnung, H die Shorehärte A, E die Rückprallelastizität und C.S. der Compression Set.

Das nach Beispiel 8 unter Verwendung von Polybutylacrylat erhaltene Polymer liefert ein überlegenes Vulkanisat :

Sowohl im Modul als auch in den Härte- und Elastizitätsdaten ist Beispiel 8 verbessert, ein Hinweis auf eine gleichmäßigere Netzwerkausbildung.

## Beispiele 10-12

In dieser Serie wird ein mit erhöhter Estermenge und bei erhöhter Temperatur hergestelltes Polymer in seinen Vulkanisatwerten Vergleichsprodukten gegenübergestellt. Die Herstellung erfolgte analog Beispiel 1, Abweichungen vgl. Tabelle 5.

Tabelle 5

| Beispiel | EN | PBA | Temp. °C | ML-4' (100°C) | DH/DE | Jod-zahl | $C_3$ |
|----------|----|------|------|----|---------|------|------|
| 10 | ·12 | 0.21 | 60° | 70 | 6.9/18 | 19.6 | 42.0 |
| 11 (Vergleich) | 12 | – | 50° | 90 | 12.6/25 | 16.2 | 48.7 |
| 12 (Vergleich) | 12 | – | 60° | 77 | 8.8/21 | 20.2 | 48.0 |

Nach der in Beispiel 7 beschriebenen Mischungsrezeptur wurden bei 160 °C und 45 Minuten Heizzeit Vulkanisate hergestellt (Vergleich mit Beispiel 9). Tabelle 6 zeigt, daß das mit Ester hergestellte Polymer insbesondere in der Reißfestigkeit überlegen ist. Bei vergleichsweise hoher Dehnung wird ein günstigerer Modul erzielt. Der Compression Set ist ebenfalls verbessert.

Tabelle 6

| Beispiel | F | D | M(100) | M(300) | H | E | C.S. |
|----------|------|-----|--------|--------|----|----|-----------|
| 10 | 14.8 | 315 | 3.4 | 14.8 | 71 | 57 | 12.7/49.7 |
| 11 (Vergleich) | 10.2 | 255 | 3.4 | – | 71 | 58 | 12.7/50.1 |

7

Tabelle 6 (Fortsetzung)

| Beispiel | F | D | M(100) | M(300) | H | E | C.S. |
|---|---|---|---|---|---|---|---|
| 12 (Vergleich) | 12.8 | 305 | 3.1 | - | 71 | 57 | 12.8/51.4 |
| 9 | 11.8 | 305 | 3.1 | - | 70 | 57 | 12.1/54.1 |

Beispiel 13-18

Diese Versuche zeigen den Einfluß verschiedener Estertypen. Herstelldaten wie Beispiel 1, Abweichungen vgl. Tabelle 7.

Tabelle 7

| Beispiel | EN | Ester Typ | mMol/h | ML-4' (100°C) | DH/DE | Jod-zahl | $\frac{ML}{DE}$ x 100 |
|---|---|---|---|---|---|---|---|
| 13 | 9 | A | 1.28 | 69 | 5.4/10 | 14.7 | 690 |
| 14 | 9 | B | 1.28 | 104 | 10.8/15 | 14.8 | 693 |
| 15 | 9 | A | 0.80 | 80 | 7.1/11 | 14.8 | 727 |
| 16 | 9 | C | 0.80 | 72 | 4.9/10 | 13.9 | 720 |
| 17 | 9 | C | 0.32 | 90 | 8.3/16 | 14.1 | 563 |
| 18 (Vergleich) | 9 | - | - | 89 | 10.0/20 | 13.3 | 445 |

Erläuterungen zu Spalte 3 :
A = Polyester aus Hexandiol/Dimerfettsäure, MG 10.000
B = Polybutylacrylat, L-Wert 44 cm³/g
C = Polyester aus Adipinsäure/Octadecandiol-1,12 ; MG 4.300.

In Tabelle 8 sind die gemäß Beispiel 7 erhaltenen Vulkanisatwerte zusammengefaßt. Tabelle 7 gibt den Einfluß sowohl verschiedenartiger als auch verschiedener Mengen Ester wieder. Die Kennziffer ML/DE × 100 für den Nullversuch 18 liegt mit 445 am niedrigsten, während die erfindungsgemäß erhaltenen Polymeren 16 und 17 bei sowohl gleicher als auch etwas niedrigerer Einsatzmenge (Mole COOR-Gruppen) Ester deutlich höhere Kennziffern liefern. Im Vergleich zum Nullversuch weisen alle « Ester »-Polymeren erhöhte Jodzahlen auf.

Tabelle 8

| Beispiel | F | D | M(300) | H23/70 | E23/70 | C.S. |
|---|---|---|---|---|---|---|
| 13 | 13.0 | 345 | 12.1 | 72/71 | 57/61 | 11.3/53.0 |
| 14 | 15.5 | 375 | 12.9 | 72/71 | 58/63 | 10.2/50.8 |
| 15 | 14.7 | 375 | 12.2 | 71/71 | 58/62 | 11.0/54.8 |

Tabelle 8 (Fortsetzung)

| Beispiel | F | D | M(300) | H23/70 | E23/70 | C.S. |
|---|---|---|---|---|---|---|
| 16 | 15.1 | 380 | 12.1 | 72/71 | 57/61 | 13.1/54.7 |
| 17 | 13.5 | 355 | 12.1 | 72/71 | 58/62 | 10.1/53.4 |
| 18 | 13.5 | 350 | 12.3 | 72/71 | 57/64 | 10.8/56.7 |

Die Vulkanisatwerte von Beispiel 14, 15 und 16 zeigen in den Reißfestigkeiten Vorteile gegen den Vergleichsversuch 18. Im Modul fällt Versuch 14 positiv aus (Polybutylacrylatzusatz). Eine weitere Differenzierung läßt die Betrachtung der Differenzen aus den E 23°/E 70 °C-Werten zu. Am höchsten liegt diese Differenz beim Vergleichsversuch 18 (Δ = 7 Einheiten). Die mit Estern hergestellten Polymeren liefern Δ-Werte von nur vier Einheiten. Der Compression Set bei verschärften Bedingungen (100 °C/70 Stunden) zeigt ebenfalls Überlegenheit von mit Estern hergestellten Polymeren.

Beispiel 19-21

Diese Beispiele belegen den Vorteil des erfindungsgemäßen Katalysatorsystems bei der Herstellung von EPDM-Typen mit Dicyclopentadien (DCP) (Tabelle 9).

9

Tabelle 9

Herstellbedingungen :
Hexan 2.7 1/h, Ethylen 100 g/h, Propylen 370 g/h ; BPCC 0.4 g/h ; VOCl$_3$ 0.043 g/h ;
(Abkürzungen Beispiel 1).

| Beispiel | DCP (g/h) | Anilin (g/h) | Ester (g/h) | EASC (g/h) | Temp. °C | ML-4° 100°C | DH/DE | Jod-zahl | Gel[2] |
|---|---|---|---|---|---|---|---|---|---|
| 19 | 10 | – | 0.6[1] | 1.235 | 60 | 87 | 18.1/38 | 8.1 | 1 |
| 20 (Vergleich) | 10 | 0.24 | – | 1.235 | 60 | 116 | 26.0/49 | 8.9 | 4 |
| 21 | 10 | 0.18 | 0.9[3] | 1.235 | 60 | 76 | 16.2/38 | 8.6 | 1 |

1) Polyester aus Hexandiol-1,6 und dimerer Ölsäure ; MG 10.000 ;
2) Gelabscheidung : 1 : an der Katalysatordüse gering, sonst keine, 4 : an allen Teilen des Reaktors.
3) Polyester aus Adipinsäure/Octadecandiol-1,2 ; MG 4.300.

Beispiele 22-24

Diese Beispiele belegen die Wirksamkeit der Kombination von Diethylaluminiummonochlorid (DEAC) mit einem Esterpolymer. Bei der Herstellung dieser hoch-ungesättigten Typen traten im Reaktor keine Gelausscheidungen auf.

Herstellbedingungen

Hexan 2,7 l/h, Ethylen 90 g/h, Propylen 370 g/h, BPCC 0,4 g/h, $VOCl_3$ 0,043 g/h, DEAC 1,202 g/h, Temperatur 40 °C, Polyester (Typ wie Beispiel 19) 0,6 g/h.

Tabelle 10

| Beispiel | DCP g/h | Ester g/h | Jod-zahl | Ml-4' (100°C) | DH/DE | $C_3$ % |
|----------|---------|-----------|----------|---------------|---------|--------|
| 22 | 15 | 0.6 | 12.5 | 55 | 11.0/32 | 43.0 |
| 23 | 18 | 0.6 | 14 | 63 | 14.7/28 | 42.1 |
| 24 | 25 | 0.6 | 20.1 | 70 | 16.7/41 | 39.5 |

Fortsetzung Tabelle 10

| Beispiel | F | D | M(300) | H(23°) | E(23/70°) |
|----------|------|-----|--------|--------|-----------|
| 22 | 19.9 | 354 | 16.4 | 68 | 49/51 |
| 23 | 20.4 | 328 | 18.2 | 67 | 49/52 |
| 24 | 22.9 | 354 | 19.8 | 68 | 49/52 |

**Patentansprüche**

1. Verfahren zur Polymerisation von Gemischen aus wenigstens zwei $C_2$-$C_6$-Olefinen und einem Polyen in einem Kohlenwasserstoff mit Hilfe eines Katalysators aus
    1) einer Vanadiumverbindung,
    2) einem Aluminiumhalogenid der Formel $AlR_{3-n}X_n$,
worin R $C_1$-$C_8$-Alkyl
    X Halogen und
    n 1 bis 2 bedeuten, und
    3) einem estergruppenhaltigen Polymer,
dadurch gekennzeichnet, daß das estergruppenhaltige Polymer in Reaktionsmedium löslich ist.

2. Verfahren nach Anspruch 1 zur Herstellung eines Polymeren aus Ethylen, Propylen und Ethylidennorbornen oder Dicyclopentadien als dritter Komponente.

3. Verfahren nach Anspruch 1, dadurch gekennzeichnet, daß das estergruppenhaltige Polymer einen Polymeriationsgrad von 3 bis 5 000 hat und einer der folgenden Substanzklassen angehört:
    1) Acrylatpolymere,
    2) Vinylesterpolymere,
    3) Polyester aus Dicarbonsäuren und Diolen,
    4) Polyester aus Hydroxycarbonsäuren.

4. Verfahren nach Anspruch 3, dadurch gekennzeichnet, daß das estergruppenhaltige Polymer einen Polymerisationsgrad von 5 bis 1 000 aufweist.

5. Verfahren nach Anspruch 1, dadurch gekennzeichnet, daß man bei 10 bis 120 °C polymerisiert.

6. Katalysatorsystem aus
    1) einer Vanadiumverbindung,
    2) einem Aluminiumhalogenid der Formel $AlR_{3-n}X_n$,
worin R $C_1$-$C_8$-Alkyl,
    X Halogen und

n 1 bis 2 bedeuten, und
   3) einem estergruppenhaltigen Polymer,
dadurch gekennzeichnet, daß das estergruppenhaltige Polymer in Propen, Butenen, Pentan, Hexan, Cyclohexan, Benzol oder Toluol oder Mischungen dieser Kohlenwasserstoffe löslich ist.

## Claims

1. A process for the polymerization of mixtures of at least two $C_2$-$C_6$ olefins and a polyene in a hydrocarbon using a catalyst of
   1) a vanadium compound,
   2) an aluminium halide of the formula $AlR_{3-n}X_n$,
in which R = $C_1$-$C_8$ alkyl,
   X = halogen and
   n = 1 to 2, and
   3) a polymer containing ester groups,
characterized in that the polymer containing ester groups is soluble in the reaction medium.

2. A process as claimed in Claim 1 for the production of a polymer of ethylene, propylene and ethylidene norbornene or dicyclopentadiene as third component.

3. A process as claimed in Claim 1, characterized in that the polymer containing ester groups has a degree of polymerization of 3 to 5 000 and belongs to one of the following classes of substances :
   1) acrylate polymers,
   2) vinyl ester polymers,
   3) polyesters of dicarboxylic acids and diols,
   4) polyesters of hydroxycarboxylic acids.

4. A process as claimed in Claim 3, characterized in that the polymer containing ester groups has a degree of polymerization of 5 to 1 000.

5. A process as claimed in Claim 1, characterized in that the polymerization is carried out at 10 to 120 °C.

6. A catalyst system of
   1) a vanadium compound,
   2) an aluminium halide corresponding to the formula $AlR_{3-n}X_n$,
in which R = $C_1$-$C_8$ alkyl,
   X = halogen and
   n = 1 to 2, and
   3) a polymer containing ester groups,
characterized in that the polymer containing ester groups is soluble in propene, butenes, pentane, hexane, cyclohexane, benzene or toluene or mixtures of these hydrocarbons.

## Revendications

1. Procédé de polymérisation de mélanges formés d'au moins deux oléfines en $C_2$ à $C_6$ et d'un polyène dans un hydrocarbure à l'aide d'un catalyseur constitué
   1) d'un composé de vanadium,
   2) d'un halogénure d'aluminium de formule $AlR_{3-n}X_n$,
dans laquelle R est un groupe alkyle en $C_1$ à $C_8$
   X est un halogène, et
   n a une valeur de 1 à 2, et
   3) d'un polymère porteur de groupes ester,
caractérisé en ce que le polymère porteur de groupes ester est soluble dans le milieu réactionnel.

2. Procédé suivant la revendication 1 pour la production d'un polymère d'éthylène, de propylène et d'éthylidène-norbornène ou de dicyclopentadiène comme troisième composant.

3. Procédé suivant la revendication 1, caractérisé en ce que le polymère porteur de groupes ester a un degré de polymérisation de 3 à 5 000 et appartient à l'une des classes de substances suivantes :
   1) polymères d'acrylate,
   2) polymères d'esters de vinyle,
   3) polyesters d'acides dicarboxyliques et diols,
   4) polyesters d'acides hydrocarboxyliques.

4. Procédé suivant la revendication 3, caractérisé en ce que le polymère porteur de groupes ester a un degré de polymérisation de 5 à 1 000.

5. Procédé suivant la revendication 1, caractérisé en ce qu'on conduit la polymérisation à une température de 10 à 120 °C.

6. Système catalyseur constitué
   1) d'un composé de vanadium,

**0 132 636**

2) d'un halogénure d'aluminium de formule $AlR_{3-n}X_n$,
dans laquelle R est un groupe alkyle en $C_1$ à $C_8$,
X est un halogène et
n a une valeur de 1 à 2, et
3) d'un polymère porteur de groupes ester,
caractérisé en ce que le polymère porteur de groupes ester est soluble dans le propène, les butènes, le pentane, l'hexane, le cyclohexane, le benzène ou le toluène ou dans des mélanges de ces hydrocarbures.